# FASCICULE DE BREVET EUROPEEN

(11) **EP 4 419 453 B1**
(45) Date de publication et mention de la délivrance du brevet: **19.08.2026**
(21) Numéro de dépôt: 22801170.6
(22) Date de dépôt: 18.10.2022
(51) Int. Cl.: B65G 21/02, B65G 21/06, B65G 21/08

(54) **CHÂSSIS DE SUPPORT POUR CONVOYEUR À BANDE, CONVOYEUR ET PROCÉDÉ DE MONTAGE ASSOCIÉS**
STÜTZRAHMEN FÜR BANDFÖRDERER, FÖRDERER UND ENTSPRECHENDES MONTAGEVERFAHREN
BELT CONVEYOR SUPPORT FRAME, CONVEYOR AND MOUNTING METHOD THEREFORE

(30) Priorité: 19.10.2021 FR 2111111
(43) Date de publication de la demande: 28.08.2024
(73) Titulaire: Brunone, René, 27950 Saint Marcel (FR)
(72) Inventeur: Brunone, René, 27950 Saint Marcel (FR)
(74) Mandataire: Lavoix
(86) Numéro de dépôt international: PCT/EP2022/078920
(87) Numéro de publication internationale: WO 2023/066903

(56) Documents cités:
- WO-A1-2009/130680
- DE-U- 1 797 649
- FR-A1- 2 133 531
- FR-A1- 2 824 816
- FR-A1- 2 876 087
- FR-A1- 3 029 184
- GB-A- 2 187 253

## Description

La présente invention concerne selon un premier aspect un châssis de support pour convoyeur à bande.

Les convoyeurs à bande sont couramment utilisés sur les chantiers afin d'assurer le transport des matériaux d'excavation ou de remblais, évitant le transport de ces matériaux par des véhicules tels que des camions. Ces convoyeurs à bande comportent une succession de châssis de support disposés à la suite les uns des autres, la bande mobile étant supportée par ces châssis de support sur l'ensemble de son trajet. Ces châssis de support comportent généralement un bâti sur lequel sont fixées des stations de support de bande, par exemple en utilisant des noix de serrage.

Sur les chantiers, notamment de très grandes étendues, il est nécessaire de disposer de convoyeurs pouvant être installés et démontés facilement.

On connait des châssis de support formés d'un ensemble de profilés métalliques reliés les uns aux autres par boulonnage. La mise en œuvre d'un tel convoyeur nécessite le montage sur le chantier de l'ensemble des châssis, puis leur démontage complet en vue d'un éventuel remontage du convoyeur en un autre endroit du chantier.

La structure de ce type de convoyeur rend le montage et le démontage longs et fastidieux.

D'autres châssis de support pour convoyeur à bande sont connus des documents FR 2 133 531 A1, qui divulgue un châssis de support pour convoyeur à bande selon le préambule de la revendication 1, FR 2 824 816 A1 et FR 3 029 184 A1.

L'invention a pour objet de proposer un châssis de support pour convoyeur à bande dont le montage et le démontage peuvent être effectués facilement et rapidement. Ainsi que faciliter son stockage en limitant le nombre de pièces.

A cet effet, l'invention a pour objet un châssis de support pour convoyeur à bande tel que décrit dans la revendication 1.

Ainsi, le montage du châssis de support est facilité et rapide. Le bâti comporte un nombre d'éléments limité. Le montage des éléments du bâti s'effectue par insertion des extrémités des éléments de support dans les stations de maintien sans nécessiter de boulonnerie. Les stations de maintien assurent un bon maintien du châssis de support. Chaque station supérieure de support de bande est installée facilement par l'opérateur car elle se pose en appui sur le bâti. Ainsi, un unique opérateur peut procéder au montage du châssis de support.

Selon des modes de réalisation particuliers, le châssis de support comprend l'une ou plusieurs des caractéristiques décrites dans les revendications 2 à 6, prise isolément ou selon toutes les combinaisons techniquement possibles.

L'invention concerne également selon un deuxième aspect un convoyeur à bande selon la revendication 7.

L'invention concerne selon un troisième aspect un procédé de montage d'un châssis de support tel que décrit ci-dessus, selon la revendication 8.

L'invention sera mieux comprise à la lecture de la description qui va suivre, donnée uniquement à titre d'exemple et faite en référence aux dessins annexés, parmi lesquels :
- [Fig 1] [Fig 2] les figures 1 et 2 sont des vues en perspective d'un châssis de support pour convoyeur à bande selon l'invention,
- [Fig 3] la figure 3 est une vue de côté du châssis de support des figures 1 et 2,
- [Fig 4] [Fig 5] [Fig 6] [Fig 7] [Fig 8] les figures 4 à 8 sont des vues détaillées de certains éléments du châssis de support des figures 1 et 2.

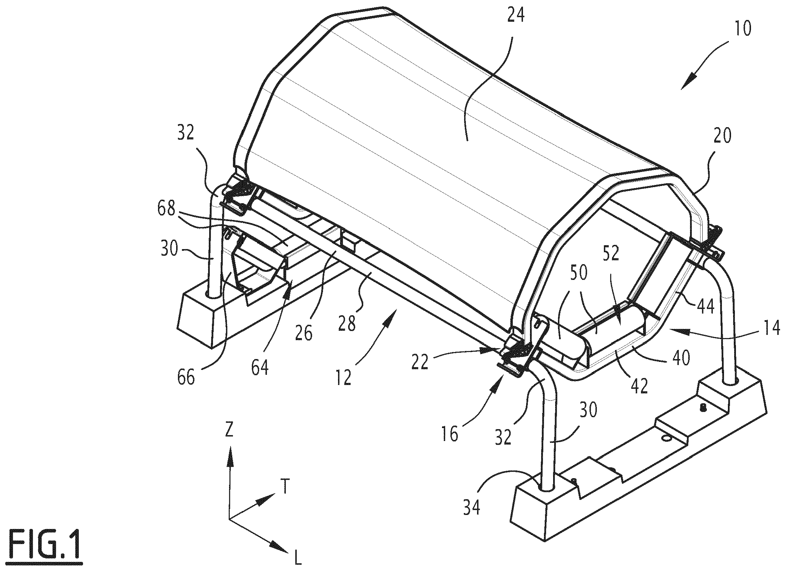

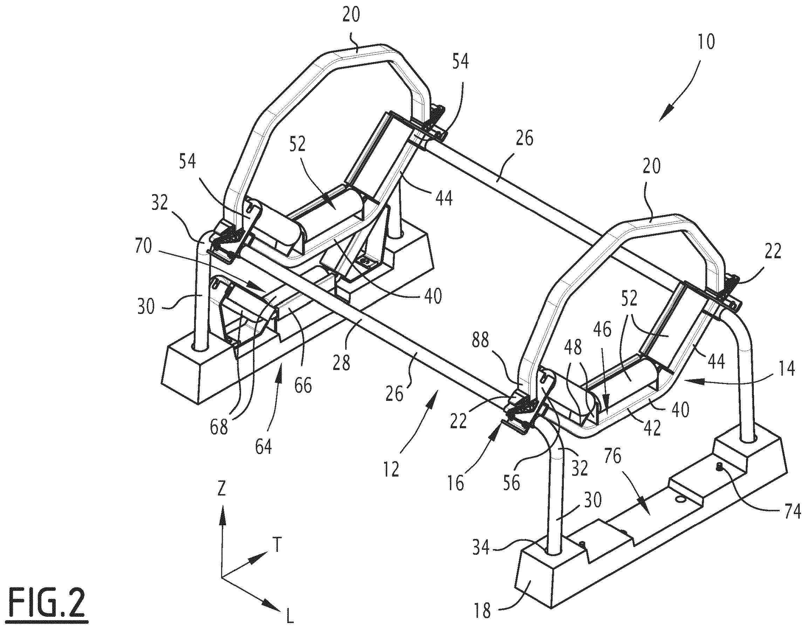

On a représenté sur les figures 1 à 3 un châssis de support 10 pour convoyeur à bande selon l'invention.

Le châssis de support 10 est destiné à être mis en œuvre dans un convoyeur à bande comportant une pluralité de tels châssis de support 10 disposés les uns à la suite des autres selon la longueur du convoyeur. Dans la suite de la description, il est fait référence à une direction longitudinale L correspondant à la longueur du convoyeur, c'est-à-dire à la direction de déplacement de la bande. La direction transversale T, sensiblement perpendiculaire à la direction longitudinale, correspond à la largeur du convoyeur. La direction d'élévation Z correspond à la hauteur du convoyeur. Elle est sensiblement perpendiculaire à la direction longitudinale L et à la direction transversale T.

Dans la suite de la description, les termes « supérieur(e) » et « inférieur(e) » sont relatifs à la direction d'élévation Z. Ainsi, un élément « supérieur » est disposé au-dessus d'un élément « inférieur » selon la direction d'élévation Z.

Le convoyeur à bande comporte une bande de transport (non représentée), connue de l'état de la technique, repliée sur elle-même, et un dispositif d'entrainement de la bande (non représenté) pour mettre en mouvement la bande, également connu de l'état de la technique.

La bande est repliée sur elle-même pour une former une boucle.

La bande comprend un brin supérieur pour le transport des produits et un brin inférieur permettant le retour de la bande dans le sens inverse au sens de transport des produits.

Les châssis de support 10 sont par exemple répartis régulièrement selon la direction longitudinale, par exemple espacés de 5 à 10 m.

Chaque châssis de support 10 comporte un bâti 12, au moins une station supérieure 14 de support de bande, au moins un organe d'assemblage 16 démontable pour fixer la station supérieure 14 de support de bande sur le bâti 12, et au moins deux stations de maintien 18.

Dans l'exemple illustré, le châssis de support 10 comporte exactement deux stations supérieures 14 de support de bande montées sur le bâti 12 et exactement deux stations de maintien 18.

Avantageusement, dans le mode de réalisation présenté, le châssis de support 10 comprend en outre deux arceaux 20 montés sur les stations supérieures 14 de support de bande, quatre organes de support 22 d'arceau montés sur les stations supérieures 14 de support de bande et une bâche 24.

Selon l'invention, le bâti 12 comprend deux éléments de support 26, de préférence identiques entre eux. Chaque élément de support 26 s'étend selon une direction principale sensiblement parallèle à la direction longitudinale L. Dit autrement, les deux éléments de support 26 s'étendent selon des directions parallèles entre elles. Chaque élément de support 26 comprend un tronçon principal 28 et deux tronçons d'extrémité 30 disposés de part et d'autre du tronçon principal 28. Le tronçon principal 28 et les tronçons d'extrémité 30 sont par exemple reliés entre eux par des tronçons coudés 32. Le tronçon principal 28 s'étend selon une direction sensiblement parallèle à la direction longitudinale L. Les tronçons d'extrémité 30 s'étendent chacun selon une direction sensiblement parallèle à la direction d'élévation Z.

Chaque élément de support 26 est par exemple tubulaire. Chaque élément de support 26 est par exemple fait d'un seul tenant, c'est-à-dire que le tronçon principal 28, les tronçons d'extrémité 30 et les éventuels tronçons coudés 32 sont venus de matière.

En variante, chaque élément de support 26 est formé par assemblage d'une pluralité d'éléments emboités les uns avec les autres. Ceci facilite le transport des différents éléments formant le bâti 12.

En variante encore, chaque élément de support 26 est formé par soudage d'une pluralité d'éléments.

Les tronçons d'extrémité 30 sont reçus en partie dans les stations de maintien 18.

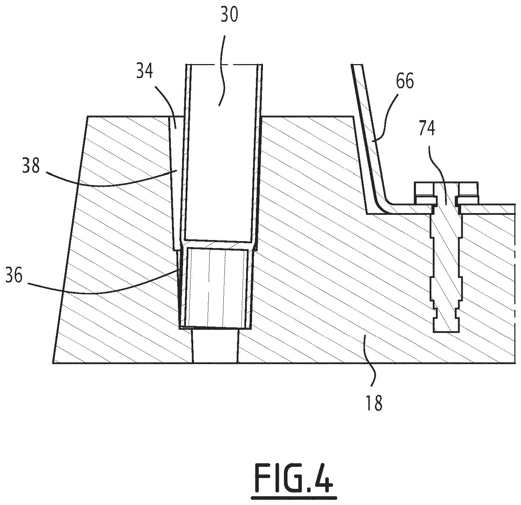

Les stations de maintien 18 sont destinées à maintenir les éléments de support 26. Les stations de maintien 18 sont destinées à être en contact avec le sol sur lequel est disposé le châssis de support 10. Les stations de maintien 18 s'étendent selon des directions sensiblement parallèles à la direction transversale T. Chaque station de maintien 18 définit deux logements 34 (figure 4) s'étendant chacun selon une direction principale sensiblement parallèle à la direction d'élévation Z. Les logements 34 sont disposés au niveau de chacune des extrémités des stations de maintien 18. La distance selon la direction transversale T entre les deux éléments de support 26 est par exemple comprise entre 1 m et 2 m. Chaque logement 34 comprend une partie inférieure 36 et une partie supérieure 38 selon la direction principale du logement 34. Avantageusement, au moins la partie inférieure 36 présente une section polygonale selon un plan sensiblement perpendiculaire à la direction principale. Par exemple la section est pentagonale. Ceci permet de bloquer la rotation des extrémités des éléments de support 26 selon la direction Z.

L'extrémité des éléments de support 26, c'est-à-dire au moins une partie des tronçons d'extrémité 30, reçue dans le logement 34 a une section complémentaire. Ceci permet d'assurer un bon maintien en bloquant les éléments de support 26 dans les stations de maintien 18.

Les stations de maintien 18 sont de préférence en béton. Elles permettent ainsi de lester le châssis de support 10 au sol, améliorant sa stabilité.

Le châssis de support 10 comprend de préférence deux stations supérieures 14 de support de bande reposant en appui sur les éléments de support 26 selon des directions sensiblement perpendiculaires à la direction longitudinale L, c'est-à-dire sensiblement parallèles à la direction transversale T.

Les stations supérieures 14 de support de bande soutiennent le brin supérieur de la bande.

Chaque station supérieure 14 de support de bande comporte un support 40 formé par exemple par un élément coudé. En particulier, le support 40 comprend une portion centrale 42 et deux partions latérales 44 reliées à la portion centrale 42 et s'étendant de part et d'autre de la portion centrale 42. La portion centrale 42 s'étend principalement selon une direction sensiblement parallèle à la direction transversale T. Chaque portion latérale 44 s'étend selon une direction formant un angle compris entre 20° et 60° avec la direction principale d'extension de la portion centrale 42.

Le support 40 comprend sur sa surface supérieure 46 des pattes 48 et une pluralité de rouleaux rotatifs 50 portés par les pattes 48. Les rouleaux rotatifs 50 sont disposés selon la direction d'extension du support 40. Les rouleaux rotatifs 50 définissent une surface d'appui 52 en creux recevant la bande. En particulier, dans l'exemple illustré, chaque station supérieure 14 de support de bande comprend trois rouleaux rotatifs 50 fixés respectivement sur chacune des portion centrale 42 et latérales 44 du support.

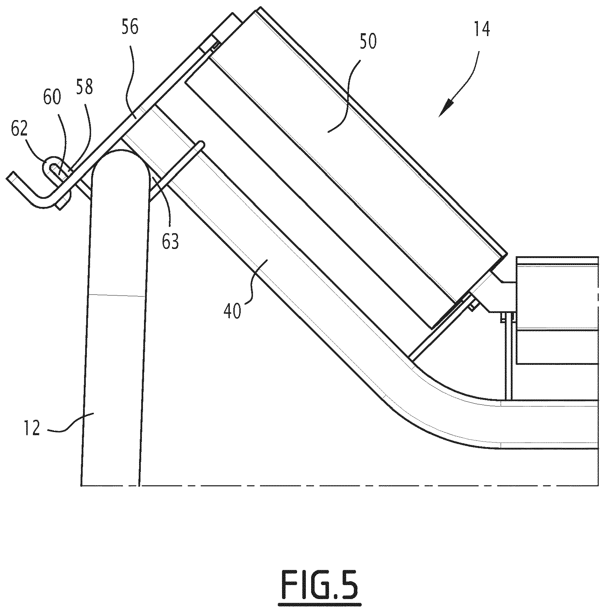

Chaque station supérieure 14 de support de bande s'étend entre deux extrémités 54. Chaque extrémité 54 entoure partiellement un des deux éléments de support 26 du bâti 12 autour d'une direction sensiblement parallèle à la direction longitudinale L (figure 5).

En particulier, la station de support supérieure 14 de bande comprend une patte de maintien 56 fixée sur chacune des extrémités des portions latérales 44 du support 40. La patte de maintien 56 s'étend de préférence selon une direction sensiblement perpendiculaire à la direction principale d'extension de la portion latérale 44 correspondante. La patte de maintien 56 définit de préférence au moins deux ouvertures traversantes recevant une partie de l'organe d'assemblage 16 démontable.

Dans le mode de réalisation illustré, le châssis de support 10 comprend deux organes d'assemblage 16 démontables pour fixer chaque station supérieure 14 de support de bande, en particulier au niveau de chacune des extrémités 54.

Chaque organe d'assemblage 16 démontable comprend par exemple une agrafe 58 et un organe de verrouillage 60. L'organe de verrouillage 60 est par exemple un plat.

L'agrafe 58 est par exemple formée par une tige déformée. L'agrafe 58 comprend deux extrémités 62 et un espace de maintien 63 entre les deux extrémités 62. L'espace de maintien 63 entoure l'extrémité 54 de la station supérieure 14 de support de bande. Les extrémités 62 de l'agrafe 58 sont recourbées et reçues au travers des ouvertures traversantes de la patte de maintien 56. Les extrémités 62 et la patte de maintien 56 définissent intérieurement entre elles deux espaces recevant l'organe de verrouillage 60. Ainsi, l'organe de verrouillage 60 assure la retenue de l'agrafe 58 autour de l'extrémité 54 de la station supérieure 14 de support de bande et de l'élément de support 26 du bâti 12.

De préférence, comme illustré sur la figure 1 à 3, le châssis de support 10 comprend au moins une station inférieure 64 de support de bande.

La station inférieure 64 de support de bande soutient le brin inférieur de la bande.

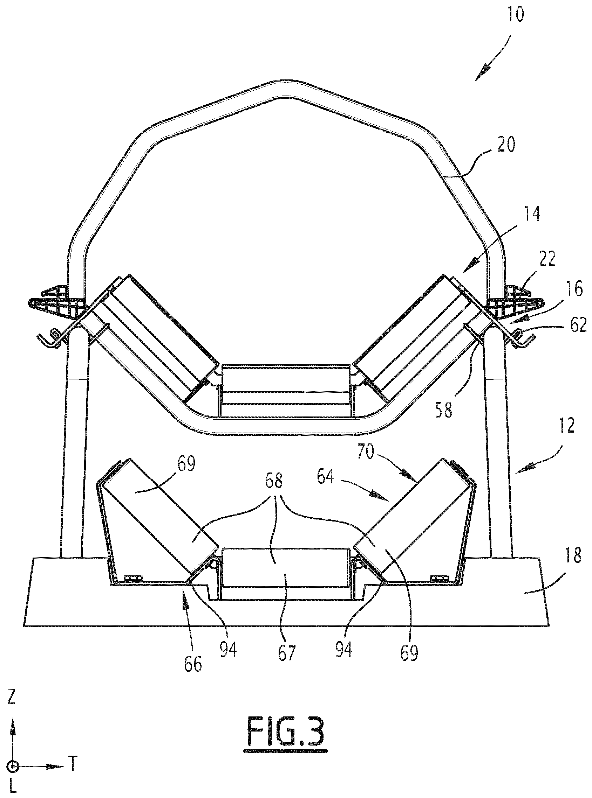

La station inférieure 64 de support de bande comprend par exemple un support 66 et une pluralité de rouleaux rotatifs 68 montés sur le support 66. Dans l'exemple illustré (figure 3), la station inférieure 64 de support de bande comprend exactement trois rouleaux rotatifs 68, et en particulier un rouleau central 67 et deux rouleaux latéraux 69 de part et d'autre du rouleau central. Les rouleaux rotatifs 68 définissent une surface d'appui 70 en creux recevant la bande, et en particulier le brin inférieur de la bande. Dans l'exemple illustré, le support 66 définit deux ouvertures traversantes.

Plus particulièrement, dans l'exemple illustré, le support 66 comprend deux organes de support 94 reçus chacun librement dans un orifice de la station de maintien 18. Chaque organe de support 94 soutient une extrémité du rouleau rotatif central 68 et un des rouleaux rotatifs latéraux 69.

Chaque organe de support 94 est mobile en rotation par rapport à la station de maintien 18 selon un axe de rotation sensiblement parallèle à la direction d'élévation Z passant par l'orifice de la station de maintien 18. Ceci permet de régler la position relative des rouleaux rotatifs latéraux 69 par rapport au rouleau rotatif central 67, notamment dans les courbes du convoyeur. En particulier, les organes de support 94 sont positionnables sur la station de maintien 18 indépendamment l'un de l'autre. Chaque organe de support 94 définit une ouverture traversante.

Chaque organe de support 94 est monté sur la station de maintien 18 au moyen d'un dispositif d'assemblage 72 démontable.

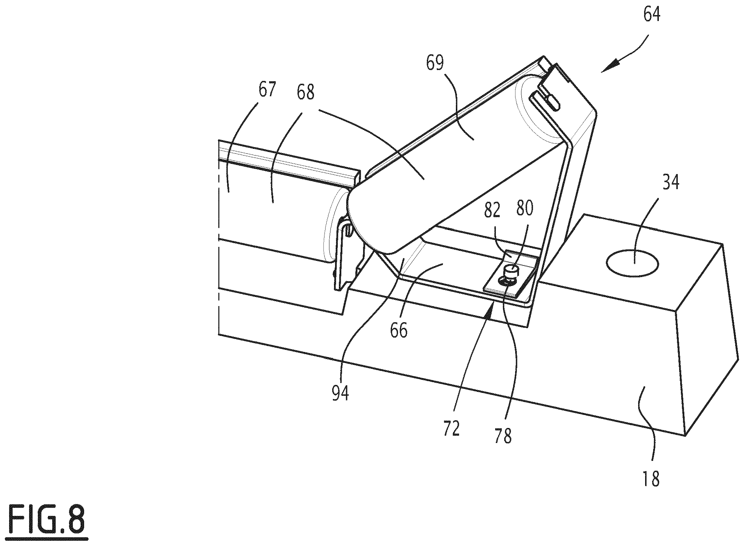

Par exemple, comme visible en particulier sur la figure 8, chaque dispositif d'assemblage 72 comprend un pion 74 s'étendant en saillie depuis une surface supérieure 76 de la station de maintien 18 et traversant l'ouverture traversante de l'organe de support 94. Le pion 74 comporte une tige 78 fixée à la station de maintien 18, et une tête 80 reliée à la tige 78. Le dispositif d'assemblage 72 comprend en outre un élément de blocage 82 interposé entre la tête 80 et l'organe de support 94 de la station inférieure 64 de support de bande.

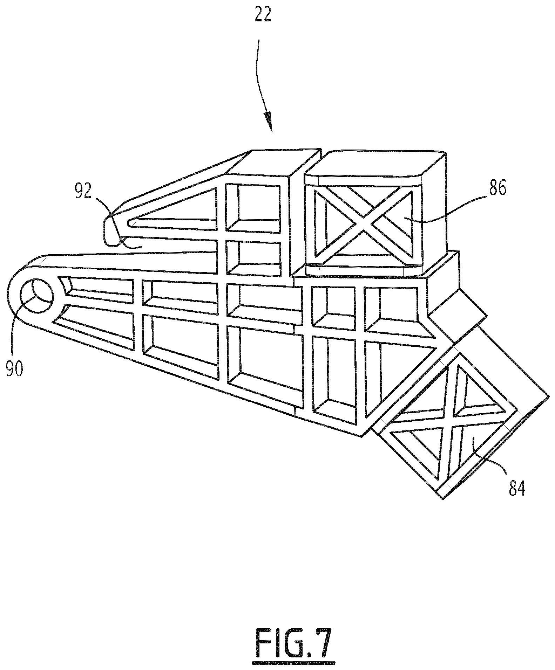

Chaque organe de support d'arceau 22 (figure 7) comporte une première portion 84 montée par emboitement sur la station supérieure 14 de support de bande, et une deuxième portion 86 recevant par emboitement une extrémité 88 de l'arceau 20.

En particulier, dans le mode de réalisation représenté, chaque extrémité 54 de la station supérieure 14 de support de bande définit un logement recevant la première portion 84 de l'organe de support d'arceau 22.

En variante, la première portion 84 de l'organe de support d'arceau 22 définit un logement recevant l'extrémité 54 de la station supérieure 14 de support de bande.

De la même manière, l'extrémité 88 de l'arceau 20 définit un logement recevant la deuxième portion 86 de l'organe de support d'arceau 22.

En variante, la deuxième portion 86 de l'organe de support d'arceau 22 définit un logement recevant l'extrémité 88 de l'arceau 20.

Avantageusement, l'organe de support d'arceau 22 définit un logement de réception 90 destiné à maintenir un câble, par exemple un câble relié à un système d'arrêt d'urgence du convoyeur. En variante ou en complément, l'organe de support d'arceau 22 définit en outre un passage 92 destiné à recevoir au moins un élément de fixation de la bâche 24, tel qu'une sangle.

L'organe de support d'arceau 22 est par exemple en matière plastique.

Par exemple, l'organe de support d'arceau 22 est obtenu par moulage.

Le châssis de support 10 comprend autant d'arceaux 20 que de stations supérieures 14 de support de bande. Dans l'exemple illustré, le châssis de support 10 comprend deux arceaux 20 disposés au-dessus de chacune des stations supérieures 14 de support de bande selon la direction d'élévation Z.

Chaque arceau 20 a une forme incurvée, de préférence sensiblement en forme de U, orientée vers la surface d'appui 52 des rouleaux rotatifs 50 de la station supérieure 14 de support de bande. Chaque arceau 20 est par exemple fait d'un seul tenant. En variante, chaque arceau 20 est formé par une pluralité d'élément fixés entre eux.

Par exemple, la bâche 24 est montée sur les arceaux 20 de sorte à couvrir au moins les stations supérieures 14 de support de bande et le brin supérieur de la bande. La bâche 24 est par exemple maintenue sur les arceaux 20 au moyen d'une pluralité d'éléments de fixation. En variante ou en complément, la bâche 24 est maintenue sur les organes de support d'arceau 22 au moyen d'un ou de plusieurs éléments de fixation, tels que des sangles.

En variante, la bâche 24 s'étend jusqu'aux stations de maintien 18 de sorte à couvrir également la station inférieure 64 de support de bande, et en particulier le brin inférieur de la bande. La bâche 24 est par exemple maintenue sur les stations de maintien 18 et/ou sur les éléments de support 26 du bâti 12.

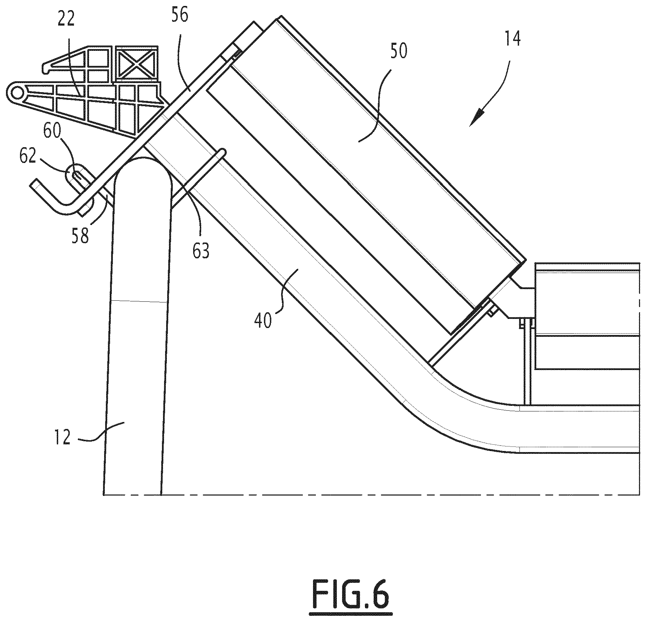

Un procédé de montage d'un châssis de support 10 tel que décrit ci-dessus va maintenant être décrit, en particulier en référence aux figures 5 et 6.

Tout d'abord, on insère les extrémités des éléments de support 26 dans les logements 34 des stations de maintien 18, permettant de bloquer la rotation selon la direction Z des éléments de support 26.

On positionne ensuite les stations supérieures 14 de support de bande en appui sur chacun des éléments de support 26 selon une direction sensiblement parallèle à la direction transversale T. Chaque station supérieure 14 de support de bande est stable sur les éléments de support 26.

On fixe ensuite chaque station supérieure 14 de support de bande avec un organe d'assemblage 16 démontable sur chacun des éléments de support 26. Dans l'exemple illustré, on positionne l'agrafe 58 de sorte à enserrer chacune des extrémités 54 des stations supérieures 14 de support de bande et à maintenir l'élément de support 26 entre l'agrafe 58 et la patte de maintien 56. On insère ensuite l'organe de verrouillage 60 pour verrouiller le montage.

De préférence, la station inférieure 64 de support de bande est montée sur une des stations de maintien 18. En particulier, on place la station inférieure 64 de support de bande de sorte que les pions 74 traversent les ouvertures traversantes du support 66 de la station inférieure 64 de support de bande. On verrouille la station inférieure 64 de support de bande sur la station de maintien 18 en insérant l'élément de blocage 82 entre la tête 80 du pion 74 et le support 66.

On monte ensuite par emboitement les organes de support d'arceau 22 sur chacune des extrémités 54 de chacune des stations supérieures 14 de support de bande. En particulier, on insère la première portion 84 des organes de support d'arceau 22 dans chacun des logements des extrémités 54 des stations supérieures 14 de support de bande.

Puis on monte par emboitement les arceaux 20 sur les organes de support d'arceau 22. En particulier, on insère la deuxième portion 86 de chacun des organes de support d'arceau 22 dans les logements des extrémités 88 des arceaux 20.

Enfin, on fixe la bâche 24 sur les arceaux 20 de sorte à couvrir au moins les stations supérieures 14 de support de bande, en variante, de sorte à couvrir les stations supérieures 14 de support de bande et la station inférieure 64 de support de bande.

Le châssis de support 10 selon l'invention est particulièrement avantageux car son montage est facilité et rapide. Le bâti 12 comporte un nombre d'éléments limité. Le montage des éléments du bâti 12 s'effectue par insertion des extrémités des éléments de support 26 dans la station de maintien 18 sans nécessiter de boulonnerie. Les stations de maintien 18 assurent un bon maintien du châssis de support 10. La station supérieure 14 de support bande est installée facilement par l'opérateur car elle se pose en appui sur le bâti 12. Ainsi, un unique opérateur peut procéder au montage du châssis de support 10 sans autres outils que le marteau.

## Revendications

1. Châssis de support (10) pour convoyeur à bande, le châssis de support (10) comportant :
- un bâti (12) comprenant deux éléments de support (26), chaque élément de support (26) s'étendant entre deux extrémités selon une direction sensiblement parallèle à une direction longitudinale (L),
- au moins une station supérieure (14) de support de bande et au moins un organe d'assemblage (16) démontable, la station supérieure (14) de support de bande reposant en appui sur les éléments de support (26) selon une direction sensiblement perpendiculaire à la direction longitudinale (L), la station supérieure (14) de support étant montée sur chacun des éléments de support (26) avec l'au moins un organe d'assemblage (16) démontable,
- au moins deux stations de maintien (18) maintenant les éléments de support (26), les stations de maintien (18) définissant des logements (34) recevant une partie des extrémités des éléments de support (26),
- au moins un arceau (20) et au moins deux organes de support d'arceau (22), **caractérisé en ce que** chaque organe de support d'arceau (22) comporte une première portion (84) montée par emboitement sur la station supérieure (14) de support de bande, et une deuxième portion (86) montée par emboitement sur une extrémité (88) de l'arceau (20).

2. Châssis (10) selon la revendication 1, dans lequel la station supérieure (14) de support de bande s'étend entre deux extrémités (54), chaque extrémité (54) entourant partiellement un des deux éléments de support (26).

3. Châssis (10) selon la revendication 1 ou 2, dans lequel chaque élément de support (26) comprend un tronçon principal (28) s'étendant selon une direction sensiblement parallèle à la direction longitudinale (L) et deux tronçons d'extrémité (30) de part et d'autre du tronçon principal (28), les tronçons d'extrémité (30) s'étendant selon des directions sensiblement perpendiculaires à la direction longitudinale (L), les tronçons d'extrémité (30) étant reçus en partie dans les logements (34) des stations de maintien (18).

4. Châssis (10) selon l'une quelconque des revendications 1 à 3, dans lequel chaque logement (34) s'étend selon une direction principale, le logement (34) comprenant une partie inférieure (36) selon la direction principale, une section de la partie inférieure (36) selon un plan sensiblement perpendiculaire à la direction principale étant polygonale, de préférence pentagonale, au moins une partie de l'extrémité des éléments de support (26) étant de section complémentaire.

5. Châssis (10) selon l'une quelconque des revendications précédentes, dans lequel chaque organe de support d'arceau (22) définit un logement de réception (90) destiné à maintenir un câble.

6. Châssis (10) selon l'une quelconque des revendications précédentes, comportant :
- au moins deux stations supérieures (14) de support de bande s'étendant chacune entre deux extrémités (54) et reposant en appui sur les éléments de support (26),
- au moins deux arceaux (20),
- au moins quatre organes de support d'arceau (22) montés sur les extrémités (54) des stations supérieures (14) de support de bande,
- une bâche (24) en appui sur les deux arceaux (20), la bâche (24) couvrant les stations supérieures (14) de support de bande.

7. Convoyeur à bande comportant une pluralité de châssis de support (10) selon l'une quelconque des revendications 1 à 6 et au moins une bande mobile supportée par les châssis de support (10).

8. Procédé de montage d'un châssis de support (10) selon l'une quelconque des revendications 1 à 6, comprenant les étapes suivantes :
- insérer des extrémités des éléments de support (26) dans les logements (34) des stations de maintien (18),
- positionner la station supérieure (14) de support de bande en appui sur chacun des éléments de support (26),
- fixer la station supérieure (14) de support de bande avec un organe d'assemblage (16) démontable sur chacun des éléments de support (26);
- monter par emboitement des organes de support d'arceau (22) sur chacune des extrémités (54) de la station supérieure (14) de support de bande,
- monter par emboitement de l'arceau (20) sur les organes de support d'arceau (22).

## Patentansprüche

1. Stützrahmen (10) für einen Bandförderer, wobei der Stützrahmen (10) Folgendes umfasst:
- ein Gestell (12), umfassend zwei Stützelemente (26), wobei sich jedes Stützelement (26) zwischen zwei Enden gemäß einer Richtung erstreckt, die im Wesentlichen parallel zu einer Längsrichtung (L) ist,
- mindestens eine obere Bandstützstation (14) und mindestens ein demontierbares Montageorgan (16), wobei die obere Bandstützstation (14) auf den Stützelementen (26) gemäß einer Richtung aufliegend ruht, die im Wesentlichen senkrecht zu der Längsrichtung (L) ist, wobei die obere Stützstation (14) auf jedem der Stützelemente (26) mit dem mindestens einen demontierbaren Montageorgan (16) montiert ist,
- mindestens zwei Haltestationen (18), die die Stützelemente (26) halten, wobei die Haltestationen (18) Aufnahmen (34) definieren, die einen Teil der Enden der Stützelemente (26) aufnehmen,
- mindestens einen Bogen (20) und mindestens zwei Bogenstützorgane (22), **dadurch gekennzeichnet, dass** jedes Bogenstützorgan (22) einen ersten Abschnitt (84) umfasst, der durch Ineinanderstecken auf der oberen Bandstützstation (14) montiert ist, und einen zweiten Abschnitt (86), der durch Ineinanderstecken auf einem Ende (88) des Bogens (20) montiert ist.

2. Rahmen (10) nach Anspruch 1, wobei sich die obere Bandstützstation (14) zwischen zwei Enden (54) erstreckt, wobei jedes Ende (54) eines der zwei Stützelemente (26) teilweise umgibt.

3. Rahmen (10) nach Anspruch 1 oder 2, wobei jedes Stützelement (26) einen Hauptabschnitt (28), der sich gemäß einer Richtung erstreckt, die im Wesentlichen parallel zu der Längsrichtung (L) ist, und zwei Endabschnitte (30) beiderseits des Hauptabschnitts (28) umfasst, wobei sich die Endabschnitte (30) gemäß Richtungen erstrecken, die im Wesentlichen senkrecht zu der Längsrichtung (L) sind, wobei die Endabschnitte (30) teilweise in den Aufnahmen (34) der Haltestationen (18) aufgenommen sind.

4. Rahmen (10) nach einem beliebigen der Ansprüche 1 bis 3, wobei sich jede Aufnahme (34) gemäß einer Hauptrichtung erstreckt, wobei die Aufnahme (34) einen unteren Teil (36) gemäß der Hauptrichtung umfasst, wobei ein Querschnitt des unteren Teils (36) gemäß einer Ebene, die im Wesentlichen senkrecht zu der Hauptrichtung ist, polygonal, vorzugsweise fünfeckig, ist, wobei mindestens ein Teil des Endes der Stützelemente (26) einen komplementären Querschnitt aufweist.

5. Rahmen (10) nach einem beliebigen der vorhergehenden Ansprüche, wobei jedes Bogenstützorgan (22) eine Aufnahmeaufnahme (90) definiert, die dazu bestimmt ist, ein Kabel zu halten.

6. Rahmen (10) nach einem beliebigen der vorhergehenden Ansprüche, umfassend:
- mindestens zwei obere Bandstützstationen (14), die sich jeweils zwischen zwei Enden (54) erstrecken und auf den Stützelementen (26) aufliegend ruhen,
- mindestens zwei Bögen (20),
- mindestens vier Bogenstützorgane (22), die auf den Enden (54) der oberen Bandstützstationen (14) montiert sind,
- eine Plane (24), die auf den zwei Bögen (20) aufliegt, wobei die Plane (24) die oberen Bandstützstationen (14) bedeckt.

7. Bandförderer, umfassend eine Mehrzahl von Stützrahmen (10) nach einem beliebigen der Ansprüche 1 bis 6 und mindestens ein mobiles Band, das von den Stützrahmen (10) gestützt wird.

8. Verfahren zur Montage eines Stützrahmens (10) nach einem beliebigen der Ansprüche 1 bis 6, umfassend die folgenden Schritte:
- Einsetzen von Enden der Stützelemente (26) in die Aufnahmen (34) der Haltestationen (18),
- Positionieren der oberen Bandstützstation (14) in Auflage auf jedem der Stützelemente (26),
- Befestigen der oberen Bandstützstation (14) mit einem demontierbaren Montageorgan (16) auf jedem der Stützelemente (26);
- Montieren durch Ineinanderstecken von Bogenstützorganen (22) auf jedem der Enden (54) der oberen Bandstützstation (14),
- Montieren durch Ineinanderstecken des Bogens (20) auf den Bogenstützorganen (22).

## Claims

1. A support frame (10) for a belt conveyor, the support frame (10) including:
- a mount (12) comprising two support elements (26), each support element (26) extending between two ends along a direction substantially parallel to a longitudinal direction (L),
- at least one upper belt support station (14) and at least one removable assembly member (16), the upper belt support station (14) resting on the support elements (26) along a direction substantially perpendicular to the longitudinal direction (L), the upper support station (14) being mounted on each of the support elements (26) with at least one removable assembly member (16),
- at least two holding stations (18) that hold the support elements (26), the holding stations (18) defining housings (34) that receive a part of the ends of the support elements (26),
- at least one arch (20) and at least two arch support members (22), each arch support member (22) having a first portion (84) mounted by engaging on the upper belt support station (14), and a second portion (86) mounted by engaging on one end (88) of the arch (20).

2. The frame (10) according to claim 1, wherein the upper belt support station (14) extends between two ends (54), each end (54) partially surrounding one of the two support members (26).

3. The frame (10) according to claim 1 or 2, wherein each support element (26) comprises a main section (28) extending along a direction substantially parallel to the longitudinal direction (L) and two end sections (30) on both sides of the main section (28), the end sections (30) extending along directions substantially perpendicular to the longitudinal direction (L), the end sections (30) being partially received in the housings (34) of the holding stations (18).

4. The frame (10) according to any of claims 1 to 3, wherein each housing (34) extends along a main direction, the housing (34) comprising a lower portion (36) along the main direction, a cross-section of the lower portion (36) along a plane substantially perpendicular to the main direction being polygonal, preferentially pentagonal, at least a part of the end of the support elements (26) having a matching cross-section.

5. The frame (10) according to any of the preceding claims, wherein each arch support member (22) defines a receiver housing (90) for holding a cable.

6. The frame (10) according to any of the preceding claims, including:
- at least two upper belt support stations (14) each extending between two ends (54) and resting on the support elements (26),
- at least two arches (20),
- at least four arch support members (22) mounted on the ends (54) of the upper belt support stations (14),
- a tarpaulin (24) resting on the two arches (20), the tarpaulin (24) covering the upper belt support stations (14).

7. A belt conveyor including a plurality of support frames (10) according to any of claims 1 to 6 and at least one movable belt supported by the support frames (10).

8. A method for mounting a support frame (10) according to any of claims 1 to 6, comprising the following steps:
- insert the ends of the support elements (26) into the housings (34) of the holding stations (18),
- position the upper belt support station (14) against each of the support elements (26),
- fasten the upper belt support station (14) with a removable assembly member (16) on each of the support (26) elements,
- mounting by engaging the arch support members (22) on each of the ends (54) of the upper belt support station (14),
- mounting by engaging the arch (20) onto the arch support members (22).
